# EUROPÄISCHE PATENTSCHRIFT

(11) **EP 2 217 851 B1**
(45) Veröffentlichungstag und Bekanntmachung des Hinweises auf die Patenterteilung: **27.03.2019**
(21) Anmeldenummer: 08848386.2
(22) Anmeldetag: 05.11.2008
(51) Int. Cl.: F21S 41/663, F21S 41/25, F21S 41/143

(54) **SCHEINWERFER FÜR FAHRZEUGE**
VEHICLE HEADLIGHTS
PROJECTEUR POUR VÉHICULES

(30) Priorität: 06.11.2007 DE 102007052742
(43) Veröffentlichungstag der Anmeldung: 18.08.2010
(73) Patentinhaber: HELLA GmbH & Co. KGaA, 59552 Lippstadt (DE)
(72) Erfinder: GÖTZ, Mirco, 59555 Lippstadt (DE); KALZE, Franz-Josef, 33428 Harsewinkel (DE); KLEINKES, Michael, 59558 Lippstadt (DE); POHLMANN, Wolfgang, 59555 Lippstadt (DE); VIEREGGE, Thomas, 44137 Dortmund (DE)
(86) Internationale Anmeldenummer: PCT/EP2008/064977
(87) Internationale Veröffentlichungsnummer: WO 2009/059987

(56) Entgegenhaltungen:
- EP-A- 1 637 397
- DE-A1- 10 340 430
- DE-A1-102004 018 957
- DE-A1-102005 041 234
- DE-B3- 10 261 183
- US-A1- 2002 034 078

## Beschreibung

Die Erfindung betrifft einen Scheinwerfer für Fahrzeuge nach dem Oberbegriff des Patentanspruchs 1.

Aus der DE 102 61 183 B3 ist ein Scheinwerfer für Fahrzeuge bekannt, der zur Erzeugung einer Abblendlichtverteilung ein LED-Feld mit einer Mehrzahl von LED-Lichtquellen aufweist, bei dem das LED-Feld asymmetrisch ausgebildet ist. Die Bereitstellung einer weiteren Lichtfunktion ist dort nicht vorgesehen.

Aus der DE 10 2005 041 234 A1 ist ein Scheinwerfer für Fahrzeuge bekannt, der zwei Gruppen von LED-Lichtquellen aufweist, die jeweils in einem LED-Feld (LED-Array) matrixartig auf einem Substrat zusammengefasst sind. Den Gruppen von LED-Lichtquellen ist jeweils eine Optikeinheit vorgelagert, so dass durch Überlagerung der mittels der Gruppen von LED-Lichtquellen jeweils erzeugten Teillichtverteilungen eine vorgegebene Lichtverteilung bzw. Lichtfunktion erzeugt wird. Nachteilig an dem bekannten Scheinwerfer ist, dass zur Erzeugung der vorgegebenen Lichtfunktion mehrere LED-Felder und denselben jeweils vorgelagerte Optikeinheiten erforderlich sind.

Aufgabe der vorliegenden Erfindung ist es, einen Scheinwerfer für Fahrzeuge mit einer Mehrzahl von LED-Lichtquellen derart weiterzubilden, dass der Aufwand für die Erzeugung von vorgegebenen Lichtverteilungen bzw. Lichtfunktionen verringert wird.

Zur Lösung dieser Aufgabe weist die Erfindung die Merkmale des Patentanspruchs 1 auf.

Der besondere Vorteil der Erfindung besteht darin, dass der Aufwand zur Erzeugung von mehreren Lichtfunktionen dadurch reduziert werden kann, dass eine auf einem LED-Feld zusammengefasste Gruppe von LED-Lichtquellen eines ersten Lichtmoduls lediglich zur Erzeugung einer einzigen Lichtfunktion dient und weitere Lichtfunktionen lediglich durch einen einzigen Zusatz-LED-Chip als Lichtquelle mit einer demselben zugeordneten Optikeinheit erzeugt werden. Vorzugsweise erzeugt das LED-Feld zusammen mit der vorgelagerten ersten Optikeinheit Zusatzlichtfunktionen, wie beispielsweise eine Autobahnlichtverteilung, so dass die Anzahl der Reihen von LED-Lichtquellen auf dem LED-Feld relativ gering gehalten werden kann. Hierdurch kann die Ausbeute und die Zuverlässigkeit dieser Baueinheit erhöht werden. Dadurch, dass zur Erzeugung einer zweiten Lichtfunktion, beispielsweise einer Fernlichtfunktion, lediglich ein Zusatz-LEDChip vorgesehen ist, kann die Komplexität des Scheinwerfers verringert werden.

Nach einer bevorzugten Ausführungsform der Erfindung sind die LED-Lichtquellen der Gruppe von LED-Lichtquellen derart dimensioniert und/oder wirken dieselben mit einer ersten Optikeinheit derart zusammen, dass im Fahrzeugvorfeld Lichtflecken mit einem horizontalen und/oder vertikalen Grenzwinkel in einem Bereich von 0,28° bis 1° abgebildet werden. Diese Lichtflecken bilden ein Feld von Lichtflecken auf einem in einem Abstand von 10 m aufgestellten Messschirm, wobei die Lichtflecken matrixartig nebeneinander und untereinnander angeordnet sind. Vorzugsweise werden die Lichtflecken unter einem gleichen horizontalen und vertikalen Grenzwinkel abgebildet, so dass auf dem Messschirm gleich große Lichtflecken abgebildet werden. Durch wahlweise Ansteuerung eines Teils der LED-Lichtquellen des LED-Feldes kann beispielsweise eine Autobahnlichtverteilung oder eine Kurvenlichtfunktion erzeugt werden.

Nach einer Weiterbildung der Erfindung wirkt der Zusatz-LED-Chip des zweiten Lichtmoduls mit der zweiten Optikeinheit derart zusammen, dass ein relativ großer Lichtfleck oberhalb einer Horizontalen eines Messschirms zur Erzeugung einer Fernlichtverteilung abgebildet wird. Die Anzahl der Reihen von

LED-Lichtquellen insgesamt kann somit relativ gering gehalten werden.

Nach einer Weiterbildung der Erfindung ist das dritte Lichtmodul zur Erzeugung einer Abblendlichtverteilung vorgesehen. Die Lichtquelle des dritten Lichtmoduls ist als ein Zusatz-LED-Chip- ausgebildet, so dass hierdurch ein Fahrzeugvorfeldbereich ausgeleuchtet werden kann, der unterhalb des durch das LED-Feld ausgeleuchteten Straßenraumbereiches liegt. Die Anzahl der horizontalen Reihen von mittels des LED-Feldes erzeugten Lichtflecken kann somit sehr gering gehalten werden.

Ein Ausführungsbeispiel der Erfindung wird nachfolgend anhand der Zeichnungen näher erläutert.

Es zeigen:
- Fig. 1: eine schematische Darstellung eines erfindungsgemäßen Scheinwerfers und
- Fig. 2: eine schematische Darstellung von mehreren mittels des Scheinwerfers erzeugbaren Lichtverteilungen, die auf einen Messschirm abgebildet sind.

Ein Scheinwerfer für Fahrzeuge besteht im Wesentlichen aus einem Gehäuse 1, in dem eine Mehrzahl von Lichtmodulen angeordnet ist.

Ein erstes Lichtmodul 2 weist eine Mehrzahl von LED-Lichtquellen 3 auf, die auf einem gemeinsamen Substrat 4 zu einem LED-Feld (LED-Array) 5 zusammengefasst sind. Dem LED-Feld 5 ist in Lichtabstrahlrichtung 6 eine erste Optikeinheit 7 vorgelagert, so dass bei Ansteuerung zumindest eines Teils der auf dem LED-Feld 5 angeordneten Gruppe von LED-Lichtquellen 3 ein erstes Lichtbündel A zur Abbildung einer Anzahl von Lichtflecken 8 in einem mittleren Fahrzeugsvorfeldraum 9 abgestrahlt wird. Die LED-Lichtquellen 3 sind matrixartig in einer Anzahl von horizontalen und vertikalen Reihen auf dem LED-Feld 5 angeordnet. Im vorliegenden Ausführungsbeispiel sind die LED-Lichtquellen 3 in drei horizontalen Reihen und vierzig vertikalen Reihen angeordnet, so dass durch Ansteuerung aller LED-Lichtquellen 3 ein Feld 10 von Lichtflecken 8 generierbar ist, das zur Ausleuchtung des mittleren Fahrzeugvorfeldraumes 9 dient.

Ein zweites Lichtmodul 12 besteht aus einem Zusatz-LED-Chip 13 und einer demselben zugeordnete zweite Optikeinheit 14 und erzeugt in Lichtbündel B zur Ausleuchtung eines sich an den mittleren Fahrzeugvorfeldraum 9 anschließenden entfernten Fahrzeugvorfeldraum 15.

Darüber hinaus ist innerhalb des Gehäuses 1 ein drittes Lichtmodul 16 vorgesehen. Dieses besteht aus einem Zusatz-LED-Chip 17 und einer derselben zugeordneten dritten Optikeinheit 18 und erzeugt ein Lichtbündel C zur Ausleuchtung eines nahen Fahrzeugvorfeldraumes 19.

Die Zusatz-LED-Chips 13, 17 können beispielsweise eine einzelne LED oder beispielsweise in dem Chipgehäuse integrierte bis zu fünf LEDs aufweisen. Diese Zusatz-LED-Chips 13, 17 sind vorzugsweise baugleich zu den LED-Lichtquellen 3, die ebenfalls als LED-Chips ausgebildet sind.

Den Lichtmodulen 2, 12, 16 ist eine Ansteuereinheit 20 zugeordnet, die in oder außerhalb des Gehäuses 1 angeordnet sein kann. Die Ansteuereinheit 20 ermöglicht das wahlweise Ein- und Ausschalten und/oder Dimmen mindestens einer LED-Lichtquelle des ersten Lichtmoduls 2 bzw. der Zusatz-LED-Chips 13, 17.

Der Ansteuereinheit 20 ist eingangsseitig eine Sensoreinheit 21 zugeordnet, die während der Fahrt im Fahrzeugvorfeld vorkommende Objekte detektiert und entsprechende Sensorsignale zu der Ansteuereinheit 20 zur Auswertung derselben sendet. Hierdurch können die Lichtmodule 2, 12, 16 in Abhängigkeit von der aktuellen Verkehrssituation zu- bzw. abgeschaltet werden. Zusätzlich ist der Ansteuereinheit 20 eine Schaltereinheit 22 zugeordnet, so dass vorgegebene Lichtverteilungen bzw. Lichtfunktionen manuell oder in Abhängigkeit von Stellungen eines im Cockpit des Fahrzeugs befindlichen Schalters einstellbar sind. In der Ansteuereinheit 20 ist vorzugsweise eine entsprechende Signalverarbeitungseinheit zur Verarbeitung der Schaltsignale und/oder der Sensorsignale vorgesehen.

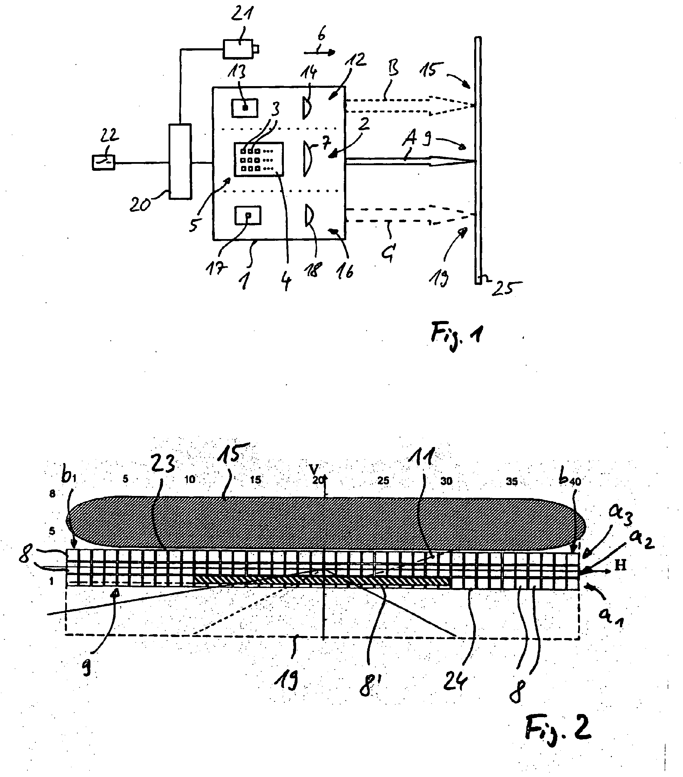

Wie aus Figur 2 deutlich wird, ermöglicht die Ansteuerung des Zusatz-LED-Chips 17 des dritten Lichtmoduls 16 die Ausleuchtung eines relativ nahen Fahrzeugvorfeldraumes 19, der zu einer Abblendlichtfunktion (Abblendlichtverteilung) korrespondiert. Die dritte Optikeinheit 18 kann derart ausgebildet sein, dass ein 15°-Anstieg 11 der Hell-Dunkel-Grenze der Abblendlichtverteilung 19 erzeugt wird.

Bei Ansteuerung des zweiten Zusatz-LED-Chips 13 wird ein relativ entfernter Fahrzeugvorfeldraum 15 ausgeleuchtet, der zu einer Fernlichtfunktion (Fernlichtverteilung) korrespondiert.

Durch Ansteuerung eines Teils einer Reihe von LED-Lichtquellen 3 des LED-Feldes 10 können Lichtflecken 8' erzeugt werden, die einen Teil eines mittleren Fahrzeugvorfeldraumes 9 ausleuchten, der zu einer Autobahnlichtfunktion (Autobahnlichtverteilung) korrespondiert. Dieser Teil des mittleren Fahrzeugvorfeldraumes 9 liegt in einem Bereich zwischen dem entfernten Fahrzeugvorfeldraum 15 und dem nahem Fahrzeugvorfeldraum 19.

Wie aus Figur 2 deutlich wird, werden auf einem in 10 m Entfernung zum Scheinwerfergehäuse 1 angeordneten Messschirm 25 die LED-Lichtquellen 3 des ersten Lichtmoduls 2 derart abgebildet, dass drei horizontale Reihen a₁, a₂, a₃ und vierzig vertikale Reihen b₁, b₂, ... b₄₀ von Lichtflecken 8 gebildet werden. Diese Lichtflecken 8 sind matrixartig nebeneinander angeordnet und erstrecken sich im Wesentlichen in einem Raumbereich zwischen der durch das dritte Lichtmodul 16 erzeugten Lichtfunktion 19 und der durch das zweite Lichtmodul 12 erzeugten Lichtfunktion 15.

Zur Bildung der Lichtflecken 8 wird das Licht der einzelnen LED-Lichtquellen 3 unter einem horizontalen und vertikalen Grenzwinkel von 0,5° aus dem ersten Lichtmodul 2 abgestrahlt. Als horizontaler Grenzwinkel wird der Raumwinkel in einer horizontalen Ebene bezeichnet, unter dem das von einer einzigen LED-Lichtquelle 3 erzeugte Licht aus dem ersten Lichtmodul 2 abgestrahlt wird.

Unter einem vertikalen Grenzwinkel wird ein solcher Raumwinkel verstanden, unter dem Licht einer LED-Lichtquelle 3 des ersten Lichtmoduls 2 aus demselben in einer vertikalen Ebene abgestrahlt wird.

Im vorliegenden Ausführungsbeispiel ist eine Reihe von LED-Lichtquellen 3 derart zu der ersten Optikeinheit 7 ausgerichtet, dass eine Reihe von Lichtflecken 8' in einem Winkel von -0,28° der Vertikalen V erzeugbar sind. Hierdurch ist gewährleistet, dass bei entsprechender Ansteuerung der die Lichtflecken 8' erzeugen LED-Lichtquellen 3 eine Autobahnlichtfunktion generierbar ist.

Die LED-Lichtquellen 3 des ersten Lichtmoduls 2 sind gleich groß ausgebildet. Die erste Optikeinheit 7 ist derart ausgebildet, dass das jeweils von den LED-Lichtquellen 3 emittierte Licht zu den Lichtflecken 8 mit einem gleich großen horizontalen und vertikalen Grenzwinkel abgebildet werden.

Die Zusatz-LED-Chips 13 und 17 sind jeweils auf einem gesonderten Zusatzsubstrat angeordnet. Im Zusammenwirken mit der zweiten Optikeinheit 14 bzw. der dritten Optikeinheit 18 werden jeweils ein relativ großer Lichtfleck 15, 19 abgebildet, wobei der horizontale Grenzwinkel der großen Lichtflecken 15, 19 einem Vielfachen des horizontalen Grenzwinkels der Lichtflecken 8 des ersten Lichtmoduls 2 entsprechen. Im vorliegenden Ausführungsbeispiel entspricht der horizontale Grenzwinkel des zweiten Lichtmoduls 12 bzw. des dritten Lichtmoduls 16 etwa dem Vierzigfachen des horizontalen Grenzwinkels der LED-Lichtquellen 3 des ersten Lichtmoduls 2, die jeweils zu den Lichtflecken 8 führen.

Die obere Reihe a₃ der Lichtflecken 8 schließt unmittelbar an einem unteren Rand 23 des oberen großen Lichtfleckes 15 und die untere Reihe a₁ der Lichtflecken 8 schließt unmittelbar an einem oberen Rand 24 des unteren großen Lichtfleckes 19 an.

Das erste Lichtmodul 2 ermöglicht die Abbildung von pixelartigen Lichtflecken 8, die zur Erzeugung von erweiterten Lichtfunktionen, wie beispielsweise Autobahnlichtfunktion, Kurvenlichtfunktion etc. eingesetzt werden können. Das zweite Lichtmodul 12 kann beispielsweise zur Erzeugung einer Fernlichtfunktion neben der Erzeugung der Fernlichtfunktion auch zur Beleuchtung von Schilderbrücken oder ähnlichen Überkopf-Zeichen eingesetzt werden.

### Bezugszeichenliste

- 1: Gehäuse
- 2: erstes Lichtmodul
- 3: LED-Lichtquellen
- 4: Substrat
- 5: LED-Feld
- 6: Lichtabstrahlrichtung
- 7: erste Optikeinheit
- 8, 8': Lichtflecken
- 9: mittlerer Fahrzeugvorfeldraum
- 10: Feld
- 11: 15°-Anstieg
- 12: zweites Lichtmodul
- 13: Zusatz-LED-Chip
- 14: zweite Optikeinheit
- 15: entfernter Fahrzeugvorfeldraum
- 16: drittes Lichtmodul
- 17: Zusatz-LED-Chip
- 18: dritte Optikeinheit
- 19: naher Fahrzeugvorfeldraum
- 20: Ansteuerelement
- 21: Sensoreinheit
- 22: Schaltereinheit
- 23: unterer Rand
- 24: oberer Rand
- 25: Messschirm

## Patentansprüche

1. Scheinwerfer für Fahrzeuge mit einem ersten Lichtmodul (2) enthaltend eine Mehrzahl von LED-Lichtquellen (3)
und eine erste Optikeinheit (7), wobei eine Gruppe von den LED-Lichtquellen (3) durch ein LED-Feld (5) der Mehrzahl von den matrixartig auf dem gemeinsamen Substrat (4) zusammengefassten LEDLichtquellen (3) gebildet ist und dem LED-Feld (5) die erste Optikeinheit (7) vorgelagert ist, wobei das LED-Feld (5) mit der ersten Optikeinheit (7) zusammenwirkt, so dass eine erste Lichtfunktion (11) zur Ausleuchtung eines mittleren Fahrzeugvorfeldraumes (9) erzeugt wird, **dadurch gekennzeichnet, dass** zur Erzeugung jeder weiteren Lichtfunktion jeweils lediglich ein einziger, auf einem Zusatzsubstrat angeordneter Zusatz-LED-Chip (13, 17) als Lichtquelle mit einer dem Zusatz-LED-Chip (13, 17) zugeordneten weiteren Optikeinheit (14, 18) vorgesehen ist,
- wobei ein zweites Lichtmodul (12) mit einem Zusatz-LED-Chip (13) und einer demselben zugeordneten zweiten Optikeinheit (14) vorgesehen ist zur Ausleuchtung eines sich an dem mittleren Fahrzeugvorfeldraum (9) anschließenden entfernten Fahrzeugvorfeldraum (15) und/oder
- wobei ein drittes Lichtmodul (16) mit einem Zusatz-LED-Chip (17) und einer demselben zugeordneten dritten Optikeinheit (18) vorgesehen ist zur Ausleuchtung eines nahen Fahrzeugvorfeldraumes (19), und
- dass die Gruppe von LED-Lichtquellen (3) des LED-Feldes (5) eine Anzahl von Reihen von LED-Lichtquellen (3) umfasst, die derart mit der ersten Optikeinheit (7) zusammenwirken, dass im mittleren Fahrzeugvorfeldraum (9) eine Anzahl von horizontalen Reihen (a1, a2, a3) von Lichtflecken (8) oberhalb und/oder unterhalb der Horizontalen (H) des Messschirms (25) abgebildet werden.

2. Scheinwerfer nach Anspruch 1, **dadurch gekennzeichnet, dass** die LED-Lichtquellen (3) des LED-Feldes (5) eine solche Dimension und/oder die erste Optikeinheit (7) eine solche Abbildungscharakteristik aufweisen, dass im Fahrzeugvorfeld Lichtflecken (8, 8') mit einem horizontalen und/oder vertikalen Grenzwinkel in einem Bereich von 0,28° bis 1° abgebildet werden.

3. Scheinwerfer nach Anspruch 1 oder 2, **dadurch gekennzeichnet, dass** die LED-Lichtquellen (3) des LED-Feldes (5) eine solche Dimension und/oder die erste Optikeinheit (7) eine solche Abbildungscharakteristik aufweisen, derart, dass im Fahrzeugvorfeld Lichtflecken (8, 8') mit einem gleichen horizontalen und vertikalen Grenzwinkel abgebildet werden.

4. Scheinwerfer nach einem der Ansprüche 1 bis 3, **dadurch gekennzeichnet, dass** der Zusatz-LED-Chip (13) mit der zweiten Optikeinheit (12) derart zusammenwirkt, dass ein relativ großer Lichtfleck (15) oberhalb einer Horizontalen (H) eines Messschirms (25) zur Bildung einer Fernlichtverteilung abgebildet wird.

5. Scheinwerfer nach einem der Ansprüche 1 bis 4, **dadurch gekennzeichnet, dass** eine obere horizontale Reihe (a3) der Lichtflecken (8) sich unmittelbar an einem unteren Rand (23) des großen Lichtflecks (15) anschließt.

6. Scheinwerfer nach Anspruch 5, **dadurch gekennzeichnet, dass** der durch den Zusatz-LED-Chip (13) erzeugte große Lichtfleck (15) entsprechend einem horizontalen Grenzwinkel abgebildet wird, der mindestens einem die Anzahl der eine horizontale Reihe bildenden LED-Lichtquellen (3) entsprechendes Vielfaches des horizontalen Grenzwinkels der Gruppe von LED-Lichtquellen (3) entspricht.

7. Scheinwerfer nach einem der Ansprüche 1 bis 6, **dadurch gekennzeichnet, dass** ein Teil (a1) der Gruppe von LED-Lichtquellen (3) derart ansteuerbar ist, dass eine Autobahnlichtfunktion (11) generierbar ist.

8. Scheinwerfer nach einem der Ansprüche 1 bis 7, **dadurch gekennzeichnet, dass** zumindest eine Reihe der Gruppe von LED-Lichtquellen (3) mit der ersten Optikeinheit (7) derart zusammenwirkt, dass eine horizontale Reihe (a1) von Lichtflecken (8') auf einem vertikalen Winkel von -0,28° bezüglich der Horizontalen (H) auf dem Messschirm (25) abgebildet wird.

9. Scheinwerfer nach einem der Ansprüche 1 bis 8, **dadurch gekennzeichnet, dass** das dritte Lichtmodul (16) bestehend aus dem Zusatz-LED-Chip (17) und der Optikeinheit (18) zur Erzeugung einer Abblendlichtverteilung vorgesehen ist.

10. Scheinwerfer nach Anspruch 9, **dadurch gekennzeichnet, dass** der Zusatz-LED-Chip (17) des dritten Lichtmoduls (16) derart mit der ihm zugeordneten Optikeinheit (18) zusammenwirkt, dass ein einziger großer Lichtfleck (19) zumindest teilweise unterhalb der Horizontalen (H) auf dem Messschirm (25) zur Bildung der Abblendlichtverteilung (19) abgebildet wird.

## Claims

1. Headlamp for vehicles with a first light module (2) comprising a multitude of LED light sources (3) and a first optics unit (7), wherein a group of the LED light sources (3) is formed by an LED field (5) of the majority of the LED light sources (3) which are combined matrix-like on the common substrate (4), and the first optics unit (7) is arranged in front of the LED field (5), wherein the optics field (5) works together with the first optics unit (7), so that a first light function (11) for the lighting of a medium-range area in front of the vehicle (9) is generated,
**characterized in that** for the generation of any further light function, merely one single additional LED chip (13, 17) arranged on an additional substrate is provided as light source, with a further optics unit (14, 18) assigned to the additional LED chip (13, 17),
- wherein a second light module (12) with an additional LED chip (13) and a second optics unit (14) assigned to the same is provided for the lighting of a far-range area in front of the vehicle (15) following the medium-range area in front of the vehicle (9), and/ or
- wherein a third light module (16) with an additional LED chip (17) and a third optics unit (18) assigned to the same is provided for the lighting of a close-range area in front of the vehicle (19), and
- that the group of LED light sources (3) of the LED field (5) comprises a number of rows of LED light sources (3), which interact with the first optics unit (7) in a manner, that in the medium-range area in front of the vehicle (9) a number of horizontal rows (a1, a2, a3) of light spots (8) is projected above and/or below the horizontal plane (H) of the measuring screen (25).

2. Headlamp according to Claim 1, **characterized in that** the LED light sources (3) of the LED field (5) have such a dimension and/ or the first optics unit (7) has such a projection characteristic that in the area in front of the vehicle, light spots (8, 8') are projected with a horizontal and/ or vertical limit angle in a range of 0.28° to 1°.

3. Headlamp according to Claim 1 or 2, **characterized in that** the LED light sources (3) of the LED field (5) have such dimensions and/ or the first optics unit (7) has/ have such a projection characteristic, that light spots (8, 8') with an identical horizontal and vertical limit angle are projected in the area in front of the vehicle.

4. Headlamp according to one of the Claims 1 to 3, **characterized in that** the additional LED chip (13) interacts with the second optics unit (12) so that a relatively large light spot (15) is projected above a horizontal plane (H) of a measuring screen (25) to form a high beam light distribution.

5. Headlamp according to one of the Claims 1 to 4, **characterized in that** an upper horizontal row (a3) of light spots (8) is arranged directly below the bottom edge (23) of the large light spot (15).

6. Headlamp according to Claim 5, **characterized in that** the large light spot (15) generated by the additional LED chip (13) is projected according to a horizontal limit angle, which corresponds at least to a multiple of the horizontal limit angle of the group of LED light sources (3) corresponding to the number of LED light sources (3) forming a horizontal row.

7. Headlamp according to one of the Claims 1 to 6, **characterized in that** a part (a1) of the group of LED light sources (3) can be controlled in a manner that a motorway light function (11) can be generated.

8. Headlamp according to one of the Claims 1 to 7, **characterized in that** at least one row of the group of LED light sources (3) interacts with the first optics unit (7) so that a horizontal row (a1) of light spots (8') is projected at a vertical angle of -0.28° relative to the horizontal plane (H) on the measuring screen (25).

9. Headlamp according to one of the Claims 1 to 8, **characterized in that** the third light module (16), comprising the additional LED chip (17) and the optics unit (18) is provided for the generation of a low beam light distribution.

10. Headlamp according to Claim 9, **characterized in that** the additional LED chip (17) of the third light module (16) interacts with the optics unit (18) assigned to it, that a single large light spot (19) is projected on the measuring screen (25) at least partially below the horizontal plane (H) to form the low beam light distribution (19).

## Revendications

1. Projecteur pour véhicules avec un premier module d'éclairage (2) comportant une majorité de sources de lumière à LED (3) et une première unité optique (7), un groupe de sources de lumière à LED (3) étant formé par un champ à LED (5) de la majorité de sources de lumière à LED (3) combinées sous forme de matrice sur un substrat commun (4) et le champ à LED (5) étant précédé par la première unité optique (7), le champ à LED (5) interagissant avec la première unité optique (7) de sorte qu'une première fonction d'éclairage (11) soit générée pour éclairer une zone moyenne à l'avant du véhicule (9),
**caractérisé en ce que**
pour générer chaque autre fonction d'éclairage une seule puce à LED supplémentaire (13, 17) disposée sur un substrat supplémentaire est prévue chaque fois en tant que source de lumière avec une autre unité optique (14, 18) associée à la puce à LED supplémentaire (13, 17),
- un deuxième module d'éclairage (12) avec une puce à LED supplémentaire (13) et une deuxième unité optique (14) qui lui est associée étant prévu pour l'éclairage d'une zone éloignée à l'avant du véhicule (15) qui suit la zone moyenne à l'avant du véhicule (9) et/ou
- un troisième module d'éclairage (16) avec une puce à LED supplémentaire (17) et une troisième unité optique (18) qui lui est associée étant prévu pour l'éclairage d'une zone proche à l'avant du véhicule (19) et
- que le groupe de sources de lumière à LED (3) du champ à LED (5) comprend un certain nombre de lignes de sources de lumière à LED (3) qui interagissent de telle manière avec la première unité optique (7) que dans la zone moyenne à l'avant du véhicule (9) un certain nombre de lignes horizontales (a1, a2, a3) de points lumineux (8) au-dessus et/ou au-dessous de l'horizontale (H) de l'écran de mesure (25) soit projetées.

2. Projecteur selon la revendication 1,
**caractérisé en ce que** les sources de lumière à LED (3) du champ à (7) présente une telle caractéristique de l'image qu'à l'avant du véhicule des points lumineux (8, 8') soient projetés avec un angle limite horizontal et/ou vertical dans une plage de 0,28° jusqu'à 1°.

3. Projecteur selon la revendication 1 ou 2,
**caractérisé en ce que** les sources de lumière à LED (3) du champ à LED (5) présentent une telle dimension et/ou la première unité optique (7) présente une telle caractéristique de l'image de telle manière qu'à l'avant du véhicule des points lumineux (8, 8') soient projetés avec un angle limite horizontal et vertical identique.

4. Projecteur selon l'une des revendications 1 à 3,
**caractérisé en ce que** la puce à LED supplémentaire (13) interagit avec la deuxième unité optique (12) de telle manière qu'un point lumineux (15) relativement grand au-dessus d'une horizontale (H) d'un écran de mesure (25) soit généré pour la réalisation d'une répartition du feu de route.

5. Projecteur selon l'une des revendications 1 à 4,
**caractérisé en ce qu'**une ligne horizontale (a3) des points lumineux (8) se joint directement à un bord inférieur (23) du grand point lumineux (15).

6. Projecteur selon la revendication 5,
**caractérisé en ce que** le grand point lumineux (15) généré par la puce à LED supplémentaire (13) est projeté selon un angle limite horizontal qui correspond à au moins un multiple de l'angle limite horizontal du groupe de sources de lumière à LED (3) correspondant au nombre de sources de lumière à LED (3) formant une ligne horizontale.

7. Projecteur selon l'une des revendications 1 à 6,
**caractérisé en ce qu'**une partie (a1) du groupe de sources de lumière à

8. Projecteur selon l'une des revendications 1 à 7,
**caractérisé en ce qu'**au moins une ligne du groupe de sources de lumière à LED (3) interagit avec la première unité optique (7) de telle manière qu'une ligne horizontale (a1) de points lumineux (8') soit projetée sous un angle vertical de -0,28° par rapport à l'horizontale (H) sur l'écran de mesure (25).

9. Projecteur selon l'une des revendications 1 à 8,
**caractérisé en ce que** le troisième module d'éclairage (16) composé de la puce à LED supplémentaire (17) et de l'unité optique (18) est prévu pour générer une répartition lumineuse du feu de croisement.

10. Projecteur selon la revendication 9,
**caractérisé en ce que** la puce à LED supplémentaire (17) du troisième module d'éclairage (16) interagit avec l'unité optique (18) lui associée de telle manière qu'un seul grand point lumineux (19) soit projeté au moins partiellement au-dessous de l'horizontale (H) sur l'écran de mesure (25) pour générer une répartition lumineuse du feu de croisement (19).
